# EUROPEAN PATENT SPECIFICATION

(11) **EP 0 907 137 B1**
(45) Date of publication and mention of the grant of the patent: **25.02.2004**
(21) Application number: 98118146.4
(22) Date of filing: 24.09.1998
(51) Int. Cl.: G06K 7/00

(54) **IC card processing system and processing method**
System und Verfahren zum Verarbeiten von Chipkarten
Système et méthode de traitement de cartes à puces

(30) Priority: 30.09.1997 JP 26614297
(43) Date of publication of application: 07.04.1999
(73) Proprietor: KABUSHIKI KAISHA TOSHIBA, Kawasaki-shi, Kanagawa-ken 210-8572 (JP)
(72) Inventor: Akaida, Tetsuro, 1-1-1, Shibaura Minato-ku Tokyo (JP)
(74) Representative: Blumbach, Kramer & Partner GbR

(56) References cited:
- EP-A- 0 562 295
- EP-A- 0 706 291
- WO-A-96/30875
- US-A- 4 709 136

## Description

### BACKGROUND OF THE INVENTION

### 1. Field of the invention

The present invention relates to IC card processing system and the processing method.

### 2. Description of the Related Art

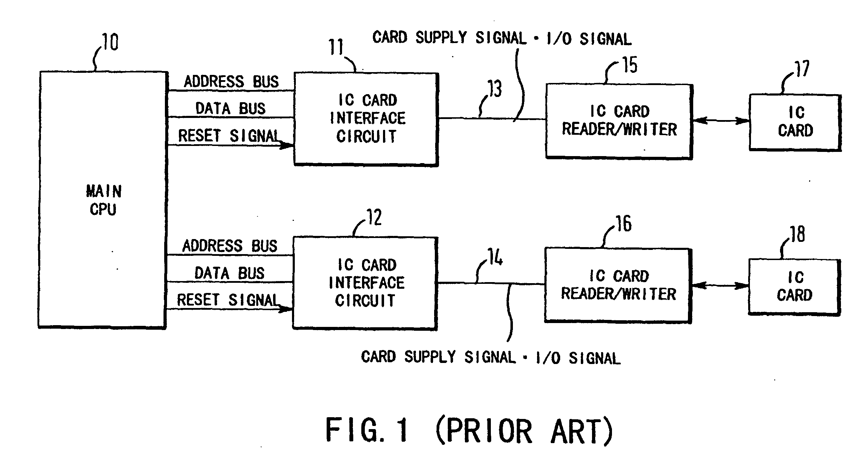

FIG. 1 shows a conventional IC card processing system. FIG. 1 is an example for the IC cards processing system, which requires an access to IC cards 17 and 18 which are a plurality of data memory media.

In order that the main CPU of an IC card processing system 10 may carry out the data transmission between the IC card 17 and the IC card 18 which are inserted into an IC card reader/writer 15 and 16 respectively, two IC-card interface circuits 11 and 12 are necessary.

The IC card interface circuits 11 and 12 are provided with the functions to control and supply the signals (for example, voltage of the electric supply, reset signal, clock signal, ground signals (hereinafter called "card supply signals")) required for the activation control of the IC cards 17 and 18, and transmission lines 13 and 14 for transmitting and receiving the instruction message signals for the IC cards 17 and 18 and the response message signals from the IC cards 17 and 18 to the instruction message signals. Also, address bus, data bus and a wiring transmitting reset signals are provided respectively between the main CPU 10 and the interface circuits 11 and 12. With this arrangement it is made possible that the data transmission with the IC cards 17 and 18 is carried out by means of the IC cards interface circuits 11 and 12 under the control of the main CPU 10.

In the conventional arrangement mentioned in the above, two interface circuits 15 and 16 are necessary in a whole, which correspond to the IC cards 17 and 18 respectively at the relation of one to one, which are inserted in the IC card reader/writer 15 and 16.

In other words, in the conventional example shown in FIG. 1, in order to be able to access to two IC cards 17 and 18, the card supply signal and two IC card interface circuits 11 and 12 which supply I/O signal are required.

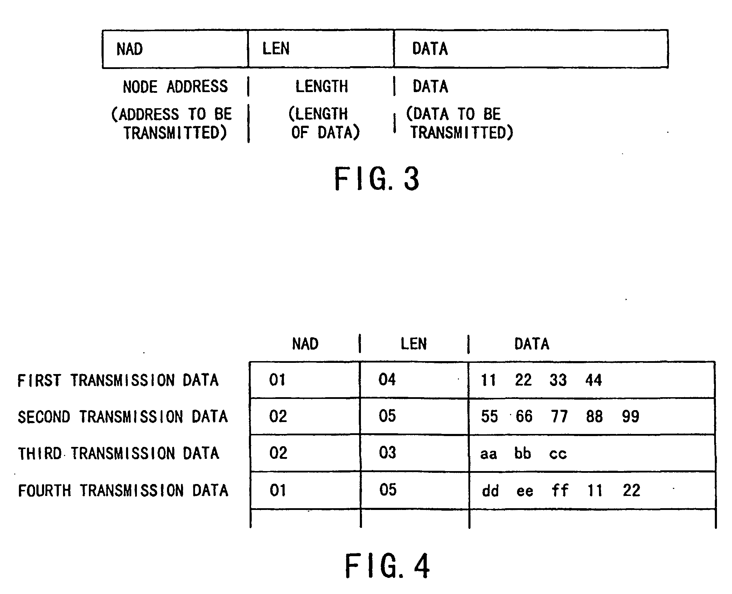

In general, the data transmission has to be carried out in accordance with a communication protocol which is the rule that sender and receiver have 10 follow. As shown in FIG. 3, in the communication protocols, there is a protocol that involves a plurality of node addresses (hereinafter called "NAD") as a part of message for the system which is provided with a plurality of addresses.

In some cases of the IC card processing systems, which have a plurality of addresses, the address, to which data are to be sent, is judged by NAD and the data is transmitted to said address. Also, in some cases of IC card processing systems, which have a plurality of IC cards, IC cards are provided with security data, which are used as the keys for the security.

However, when one reviews the processing methods for the IC cards 17 and 18 in the conventional IC-cards processing systems as shown FIG. 1, there are the problems as mentioned below.
(1) In an IC card processing system, a plurality of IC card interface circuits 11 and 12 (two circuits in a conventional example) are required. In other words, as so many IC cards interface circuits are necessary as IC cards require accesses, many components are required in a whole IC card processing system and the space required for the components becomes large.
(2) There are interface circuits 11 and 12 which correspond to IC card 17 and IC card 18 respectively and the main CPU 10 has to control all these interface circuits. The load of the main CPU becomes large because of such control.
(3) When a plurality of IC cards 17 and 18 are to be activated or inactivated, the processing has to be done independently, so that much time is required, when a plurality of IC cards 17 and 18 have to be activated or inactivated.
   In the meantime, activation means that an IC card is initialized by resetting IC card by supplying the voltage of electric supply and clock signal. When an IC card is taken out from reader/writer, the card is inactivated.
(4) In case of a conventional IC card processing system shown in FIG. 1, any special countermeasure is not taken even for the IC card, in which security data are stored, and therefore, any user may easily access the IC card, in which the security data are stored. The security of data protection is poor.

EP 0 562 295 discloses the features of the preamble of claim 1.

EP 0 706 291 discloses an IC card reader and writer including two separate IC card receptacles, such that IC cards inserted into the two separate IC card receptacles are separately accessed by the IC card reader and writer.

It is an objective of the present invention is to provide an IC card processing system and a processing method for a plurality of IC cards, wherein quantity of the required components is little, also a required space for the components can be reduced, the load of the control can be made light, activation and inactivation for a plurality of IC cards can be simplified and a high security of the security data is assured.

This object is achieved with the independent claims. Further developments of the invention are given in the sub-claims.

### BRIEF DESCRIPTION OF THE DRAWINGS

FIG. 1 is a block diagram which shows the composition of the conventional IC card processing system;
FIG. 2 is a block diagram showing the composition of the IC card processing system as an embodiment of the present invention;
FIG. 3 is an explanatory drawing showing an example of format of transmission data for the IC card processing system shown in FIG. 2;
FIG. 4 is an explanatory drawing of format of transmission data for a plurality of addresses in the IC card processing system shown in FIG. 2; and
FIG. 5 is a flow chart showing the actions of the IC card processing system shown in FIG. 2.

### DETAILED DESCRIPTION OF THE PREFERRED EMBODIMENT

Hereinafter, a preferred embodiment of the present invention will be described with reference to the attached drawings.

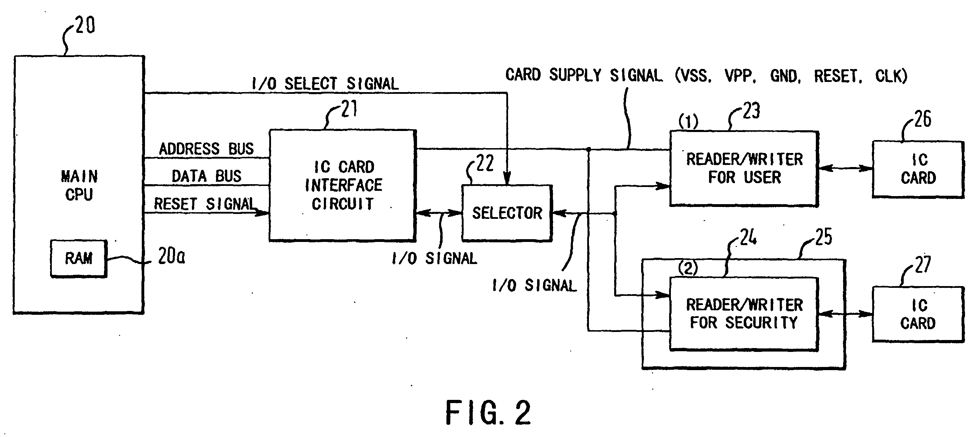

FIG. 2 shows an IC card processing system as an embodiment of the present invention. This system allows to access to an IC card 26 for user and an IC card 27 for security, which are data memory means, and which are inserted respectively into a reader/writer 23 for user and a reader/writer 24 for security which are the media processing means, from a main CPU 20 as the controls means through a single IC card interface circuit 21 and to perform the data transmission among these components.

This IC card processing system for a plurality of IC cards is provided with address bus, data bus and a signal line transmitting reset signals between the main CPU 20 and the IC card interface circuit 21, and a signal line, which supplies card supply signals (VSS, VPP, GND, RESET and CLK), between the IC card interface circuit 21 and the reader/writer 23 for the user and the reader/writer 24 for security.

VSS means the signal, which supplies the voltage of current supply to IC card, VPP means the signal, which supplies the programming voltage, and GND means the grounding signal, RESET means resetting signal and CLK means the clock signal.

Also, between the IC card interface circuit 21, the reader/writer 23 for the user and the reader/writer 24 for security, there is provided, for example, a selector 22, which is a selecting means consisting of electromagnetic relays. The selector 22 is switched to one of the ways selectively and transmit I/O signal transmitted from the IC card interface circuit either to the reader/writer 23 for user or to the reader/writer 24 for security, basing upon the select signal, i.e., I/O signal such as NAD (01,02) as shown in FIG. 4 (the I/O signals form the interface circuit are the instruction message to the IC card 26 user or IC card 27 for security and the reply message replying to the instruction message from the IC card 26 for user or IC card 27 for security as in the conventional cases).

Also, the common card supply signals (the common card supply signals are the card activation control signals such as voltage of current supply, resetting, clock and grounding as in the conventional cases) are supplied from the IC card interface circuit 21 to the reader/writer 23 for user and the reader/writer 24 for security and the IC card for user and the for security are activated.

As an example for detailed arrangement for the reader/writer 23 for user and the reader/writer 24 for security, such arrangement can be raised, that the reader/writer 23 for user is provided on one side of the same casing so that anyone may operate and the reader/writer 24 for security is provided in a locked-up section 25, which is provided on the other side of the casing and is closed with a key.

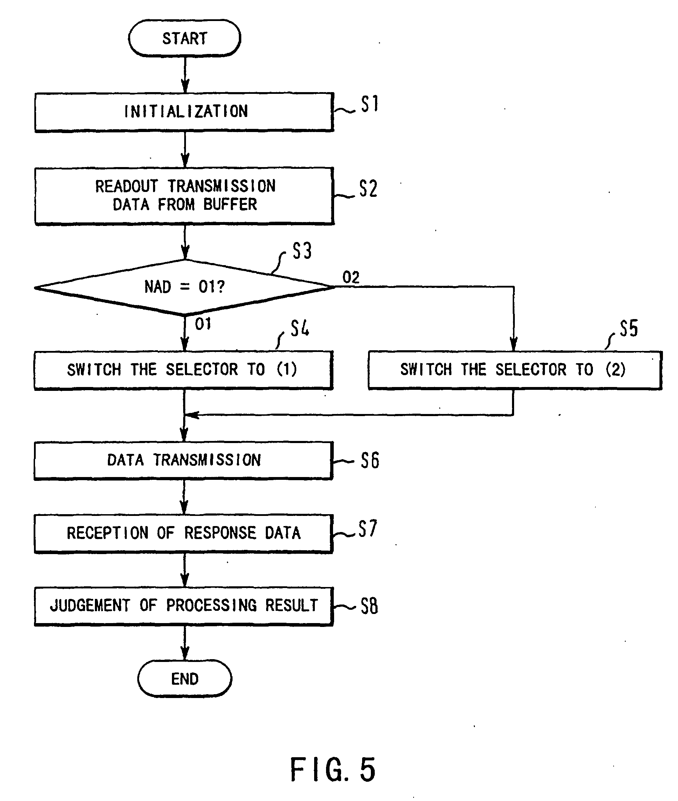

In the following, the operation of IC card processing system will be described in accordance with the drawings FIGS. 3 to 5. Meantime, FIG. 3 show a format of the transmission data to be transmitted from the main CPU 20 to the IC card 26 for user and IC card 27 for security, and consisting of NAD (NODE ADDRESS, address to be transmitted), LEN (LENGTH, length of message) and DATA (Data to be transmitted).

At first, the main CPU 20 shall be initialized as the initialization of the main CPU 20 itself (STEP 1), and DATA (data to be transmitted) shall be read out from the transmission data buffer in the RAM data area 20a (STEP 2). This data is judged whether this is (01) or (02) by referring NAD of the transmission data (STEP 3). Then if NAD = 01, the main CPU 20 transmits an I/O select signal corresponding to NAD = 01 to the selector 22 and the selector 22 is switched to the side of (1), i.e., the reader/writer 23 for user, so that a signal transmission line is formed between the IC card interface circuit 21 and the IC card reader/writer 23 for user is formed (STEP 4).

On this condition, the transmission of the aforementioned DATA (STEP 6) and the reception (STEP 7) of the reply which is read out from the reader/writer 26 for user are performed between the IC card interface circuit 21 and IC card 26, which is inserted into reader/writer 23 for user. In other words, the transmission and reception of the I/O signals are performed, and furthermore, the result of the processing is judged by the main CPU 20 (STEP 8).

On the other hand, when the main CPU 20 judged NAD = 02 at the STEP 3, the main CPU 20 transmits an I/O select signal corresponding to NAD = 02 to the selector 22 and switches the selector 22 to the side of (2), i.e., to the reader/writer for security 24, so that a signal transmission line is formed between the IC card interface circuit 21 and the reader/writer 24 for security is formed (STEP 5). The processing thereafter is same as in the case of STEP 6 to STEP 8.

As described in the above, the main CPU reads out transmission data from the transmission data buffer in order. It is made possible to store transmission data with different addresses in mixture in a single transmission data buffer, by reading out transmission data in order from the transmission data buffer by the main CPU 20 and switching the addresses according to NAD-value. Furthermore, by a simple arrangement using a single IC card interface circuit 21 and selector 22, the quantity of components has been reduced and the occupying space of the system is reduced.

Also, as the security data used in this system is stored in the IC card 27 for security, a leakage of the security data is prevented and the security of the security data is assured, as the security data is stored in the IC card for security and the reader/writer 24 for security is located in locked-up section 25, so that the IC card will not be touched by user's hand.

Meantime, if the initial confirmation of response of the IC card 27 for security is performed just after the system is turned ON, then when the IC card 26 for user is inserted, initial confirmation of response just for the IC card 26 for user itself is enough. After such confirmation, the IC card 26 for user and the IC card 27 for security can be in one lot activated or inactivated, by means of the aforementioned card supply signals.

In the meantime, the initial confirmation of response means the following process. IC card 27 for security is inserted into the reader/writer 24 for security and is activated, then the IC card 27 for security dispatches an initial response. The main CPU 20 recognizes the response and confirm whether the IC card 27 for security is right or not.

According to the embodiment of the present invention, the advantage that just one IC card interface circuit can serve a plurality of IC cards and the quantity of the parts required for the system is little. Furthermore, it becomes possible that a plurality of IC cards can be accessed just by switching the selector 22 by I/O selecting signals and thus the load for the main CPU 20 can be lightened. Furthermore, the time for activation/inactivation can be shortened as a plurality of IC cards can be activated or inactivated in a lot after initial response confirmation.

Furthermore, as the IC card stored with security data is located in the locked-up section 25, a higher security is assured.

According to the present invention, the system can reduce the quantity of the required components and reduce the required space by employing a simple arrangement using a single interface circuit and selecting means. Moreover, it is possible to provide an IC card processing system, wherein the load for the control means is made light and activation and inactivation of IC cards can be performed simply.

According to the present invention, it is possible to provide a IC cards processing method that processing of a plurality of IC cards can be performed easily, by using a single interface circuit and by switching the input/output signals transmission lines.

## Claims

1. An IC card processing system comprising:
a plurality of media processing means (23, 24) for performing data input/output processing for a plurality of IC cards (26, 27),
control means (20) for controlling the data input/output processing for the plurality of IC cards (26, 27), wherein the control means (20) being connected to a single interface means (21),
**characterized in that**
the single interface means (21) is adapted for supplying common card supply signals necessary for controlling the operation of the IC cards (26, 27) commonly to the plurality of media processing means (23, 24), and supplying I/O-signals to only one of the plurality of the media processing means (23, 24),
wherein said one media processing means (23, 24) is selected by selecting means (22) for selectively switching said I/O-signals to said one of the plurality of media processing means (23, 24).

2. The system as claimed in claim 1, wherein the media processing means includes at leat 2 sets of card reader/writers.

3. The system as claimed in claim 2, wherein one of said IC card reader/writers corresponds to an IC card for user and the other IC card reader/writers corresponds to IC cards for security.

4. The system claimed in any one of claims 1 to 3, wherein the common card supply signals are the card activation control signals which the single interface means (21) supplies to the plurality of media processing means (23, 24) such as voltage of current supply, clock signal and reset signal.

5. The system claimed in claim 2, wherein the selecting means switches each of the input/output signals which are caused by input and output of IC card transmitted and received between the control means and the two sets of card reader/writers.

6. An IC card processing method comprising the steps of:
performing data input/output processing for a plurality of IC cards (26, 27) by a plurality of media processing means (23, 24),
controlling the data input/output processing for the plurality of IC cards (26,2 7), by control means (20), wherein the control means (20) being connected to a single interface means (21), **characterized by** the step of
supplying common card supply signals necessary for controlling the operation of IC cards (26, 27) commonly to the plurality of media processing means (23, 24) and supplying I/O-signals to only one of the plurality of media processing means (23, 24) by the single interface means (21), and
wherein said one media processing means (23, 24) is selected by selecting means (22) for selectively switching said I/O-signals to said one of the plurality of media processing means (23, 24).

7. The processing method as claimed in claim 6, wherein the media processing means includes at least two sets of card reader/writers.

8. The processing method as claimed in claim 6, wherein one of said card reader/writers corresponds to an IC card for user and the other card reader/writer corresponds to IC cards for security.

9. The processing method as claimed in any one of claims 6 to 8, wherein the common card supply signals are the card activation control signals which the single interface circuit supplies to a plurality of media processing means (23, 24) such as voltage of current supply, clock signal and resetting signal.

10. The processing method as claimed in claim 7, wherein the processing of each of the said IC cards by the two sets of card reader/writers includes the process of input and output.

## Patentansprüche

1. IC Kartenverarbeitungssystem mit
einer Mehrzahl von Medienverarbeitungsmitteln (23, 24) zum Durchführen einer Dateneingabe/Datenausgabe-Verarbeitung für eine Mehrzahl von IC Karten (26, 27),
einem Steuermittel (20) zum Steuern der Dateneingabe/Datenausgabe-Verarbeitung für die Mehrzahl der IC Karten (26, 27), wobei das Steuermittel (20) mit einem einzelnen Schnittstellenmittel (21) verbunden ist, **dadurch gekennzeichnet, dass**
das einzelne Schnittstellenmittel (21) ausgelegt ist zur Lieferung von gemeinsamen Kartenversorgungssignalen, die notwendig sind zur Steuerung des Betriebs der IC Karten (26, 27), gemeinsam an die Mehrzahl der Medienverarbeitungsmittel (23, 24), und zur Lieferung von I/O-Signalen nur an eines der Mehrzahl der Medienverarbeitungsmittel (23, 24),
wobei das eine Medienverarbeitungsmittel (23, 24) durch Auswahlmittel (22) ausgewählt wird, um die I/O-Signale selektiv an das eine der Mehrzahl der Medienverarbeitungsmittel (23, 24) zu schalten.

2. System nach Anspruch 1, bei dem das Medienverarbeitungsmittel mindestens zwei Sätze von Kartenlesern/-schreibern aufweist.

3. System nach Anspruch 2, bei dem einer der IC Kartenleser/-schreiber einer IC Karte für den Benutzer entspricht und der andere IC Kartenleser/-schreiber den IC Karten zur Sicherheit entspricht.

4. System nach einem der Ansprüche 1 bis 3, bei dem die gemeinsamen Kartenversorgungssignale Kartenaktivierungssignale sind, die das einzelne Schnittstellenmittel (21) an die Mehrzahl der Medienverarbeitungsmittel (23, 24) liefert, beispielsweise die Spannung der augenblicklichen Versorgung, das Taktsignal und Rücksetzsignal.

5. System nach Anspruch 2, bei dem das Auswahlmittel jedes der Eingabe/Ausgabe-Signale schaltet, die von der Eingabe und Ausgabe der IC Karte erzeugt werden, übertragen und empfangen zwischen dem Steuermittel und den zwei Sätzen von Kartenlesern/-schreibern.

6. IC Kartenverarbeitungsverfahren mit den Schritten:
Durchführen einer Dateneingabe/-ausgabe-Verarbeitung für eine Mehrzahl von IC Karten (26, 27) durch eine Mehrzahl von Medienverarbeitungsmitteln (23, 24),
Steuern der Dateneingabe/-ausgabe-Verarbeitung für die Mehrzahl der IC Karten (26, 27) durch ein Steuermittel (20), wobei das Steuermittel (20) mit einem einzelnen Schnittstellenmittel (21) verbunden ist, **gekennzeichnet durch** den Schritt des
Lieferns von gemeinsamen Kartenversorgungssignalen, die notwendig sind zum Steuern des Betriebs der IC Karten (26, 27), gemeinsam an die Mehrzahl der Medienverarbeitungsmittel (23, 24), und zum Liefern von I/O-Signalen nur an eines der Mehrzahl der Medienverarbeitungsmittel (23, 24) **durch** das einzelne Schnittstellenmittel (21), und
wobei das eine Medienverarbeitungsmittel (23, 24) **durch** das Auswahlmittel (22) ausgewählt wird, um die I/O-Signale an eines der Mehrzahl der Medienverarbeitungsmittel (23, 24) selektiv zu schalten.

7. Verarbeitungsverfahren nach Anspruch 6, bei dem das Medienverarbeitungsmittel mindestens zwei Sätze von Kartenlesern/-schreibern aufweist.

8. Verarbeitungsverfahren nach Anspruch 6, bei dem einer der Kartenleser/schreiber einer IC Karte für einen Benutzer entspricht und der andere Kartenleser/schreiber IC Karten zur Sicherheit entspricht.

9. Verarbeitungsverfahren nach einem der Ansprüche 6 bis 8, bei dem die gemeinsamen Kartenversorgungssignale Kartenaktivierungssteuersignale sind, die die einzelne Schnittstellenschaltung an eine Mehrzahl von Medienverarbeitungsmitteln (23, 24) liefert, beispielsweise die Spannung des gegenwärtigen Versorgung, das Taktsignal und das Rücksetzsignal.

10. Verarbeitungsverfahren nach Anspruch 7, bei dem die Verarbeitung jeder der IC Karten durch die zwei Sätze der Kartenleser/-schreiber den Prozess des Eingebens und Ausgebens aufweist.

## Revendications

1. Système de traitement de cartes à puce comprenant :
une pluralité de moyens de traitement de support (23, 24) pour effectuer un traitement d'entrée/sortie de données pour une pluralité de carte à puce (26, 27),
un moyen de contrôle (20) pour contrôler le traitement d'entrée/sortie de données pour la pluralité de cartes à puce (26, 27), dans lequel un moyen de contrôle (20) est connecté à un moyen d'interface unique (21),
**caractérisé en ce que**
le moyen d'interface unique (21) est adapté pour fournir des signaux d'alimentation de cartes en commun qui sont nécessaires pour contrôler le fonctionnement des cartes à puce (26, 27) en commun avec la pluralité de moyens de traitement de support (23, 24) et pour fournir des signaux d'entrée/sortie à un seul moyen de la pluralité de moyens de traitement de support (23, 24),
dans lequel ledit moyen de traitement de support (23, 24) est sélectionné par le moyen de sélection (22) pour commuter de manière sélective lesdits signaux d'entrée/sortie vers l'un de la pluralité de moyens de traitement de support (23, 24).

2. Système selon la revendication 1, dans lequel les moyens de traitement de support comprennent au moins deux ensembles de dispositifs de lecture/écriture de cartes.

3. Système selon la revendication 2, dans lequel un desdits dispositifs de lecture/écriture de cartes à puce correspond à une carte à puce pour l'utilisateur et l'autre dispositif de lecture/écriture de carte à puce correspond aux cartes à puce pour la sécurité.

4. Système selon l'une quelconque des revendications 1 à 3, dans lequel les signaux d'alimentation de cartes en commun sont les signaux de contrôle d'activation de cartes que le moyen d'interface unique (21) fournit à la pluralité de moyens de traitement de support (23, 24), comme le signal de tension d'alimentation de courant, le signal d'horloge et le signal de réinitialisation.

5. Système selon la revendication 2, dans lequel le moyen de sélection commute chacun des signaux d'entrée/sortie en fonction de l'entrée et de la sortie de la carte à puce qui sont transmis et reçus entre le moyen de contrôle et les deux ensembles de dispositifs de lecture/écriture de cartes.

6. Procédé de traitement de cartes à puce comprenant les étapes consistant à :
effectuer le traitement des entrées/sorties de données pour une pluralité de cartes à puce (26, 27) par une pluralité de moyens de traitement de support (23, 24),
contrôler le traitement des entrées/sorties de données pour la pluralité de cartes à puce (26, 27) par le moyen de contrôle (20), dans lequel le moyen de contrôle (20) est connecté à un moyen d'interface unique (21), qui est **caractérisé par** l'étape consistant à
fournir des signaux d'alimentation de cartes en commun qui sont nécessaires pour contrôler le fonctionnement des cartes à puce (26, 27) en commun avec la pluralité de moyens de traitement de support (23, 24) et pour fournir des signaux d'entrée/sortie à uniquement l'un de la pluralité de moyens de traitement de support (23, 24) par le moyen d'interface unique (21), et
dans lequel ledit un moyen de traitement de support (23, 24) est sélectionné par le moyen de sélection (22) pour commuter de manière sélective lesdits signaux d'entrée/sortie vers ledit un d'une pluralité de moyens de traitement de support (23, 24).

7. Procédé de traitement selon la revendication 6, dans lequel le moyen de traitement de support comprend au moins deux ensembles de dispositifs de lecture/écriture de cartes.

8. Procédé de traitement selon la revendication 6, dans lequel l'un desdits dispositifs de lecture/écriture de cartes correspond à une carte à puce pour l'utilisateur et l'autre dispositif de lecture/écriture de cartes correspond aux cartes à puce pour la sécurité.

9. Procédé de traitement selon l'une quelconque des revendications 6 à 8, dans lequel les signaux d'alimentation de cartes en commun sont les signaux de contrôle d'activation de cartes que le circuit d'interface unique fournit à une pluralité de moyens de traitement de support (23, 24), comme le signal de tension d'alimentation de courant, le signal d'horloge et le signal de réinitialisation.

10. Procédé de traitement selon la revendication 7, dans lequel le traitement de chacune desdites cartes à puce par les deux ensembles de dispositifs de lecture/écriture de cartes comprend le traitement des entrées et des sorties.
